Europäisches Patentamt

European Patent Office

Office européen des brevets

(19)

(11) Numéro de publication: **0 084 339**
**B1**

(12) ## FASCICULE DE BREVET EUROPEEN

(45) Date de publication du fascicule du brevet:
**06.08.86**

(51) Int. Cl.⁴: **H 01 M 4/70**

(21) Numéro de dépôt: **83100162.3**

(22) Date de dépôt: **11.01.83**

(54) **Support d'électrode pour accumulateur électrique.**

(30) Priorité: **14.01.82 FR 8200527**

(43) Date de publication de la demande:
**27.07.83 Bulletin 83/30**

(45) Mention de la délivrance du brevet:
**06.08.86 Bulletin 86/32**

(84) Etats contractants désignés:
**AT BE CH DE FR GB IT LI LU NL SE**

(56) Documents cités:
**FR - A - 677 195**
**FR - A - 1 002 283**
**FR - A - 1 033 177**
**FR - A - 1 261 892**
**FR - A - 1 446 593**
**FR - A - 2 250 209**
**FR - A - 2 325 201**
**US - A - 1 364 760**
**US - A - 1 447 781**

**Le dossier contient des informations techniques
présentées postérieurement au dépôt de la demande et
ne figurant pas dans le présent fascicule.**

(73) Titulaire: **Société Anonyme dite SAFT, 156, avenue de
Metz, F-93230 Romainville (FR)**

(72) Inventeur: **Prandin, Tiziano, Résidence du lac Bât. J.C. 1-
Appt. 40 D, F-33300 Bordeaux (FR)**

(74) Mandataire: **Weinmiller, Jürgen et al, Zeppelinstrasse 63,
D-8000 München 80 (DE)**

## Description

La présente invention concerne un support d'électrode pour accumulateur électrique constitué par un feuillard métallique régulièrement perforé et embouti destiné à être empâté de matière active.

Il s'agit en particulier d'un feuillard mince en nickel ou acier nickelé présentant des emboutissages permettant l'accrochage de la matière active.

Un tel support est connu, par exemple à partir du document FR-A-2 250 209. Le feuillard selon ce document est embouti d'un grand nombre de bosses ponctuelles qui sont si proches l'une de l'autre que la totalité de la surface du feuillard est pratiquement déformée.

L'invention a pour but de proposer un feuillard qui est mieux adapté à un support d'électrode, c'est-à-dire qui permet un meilleur accrochage de la matière active et présente une résistance mécanique accrue. Ce but est atteint par un support d'électrode pour accumulateur électrique constitué par un feuillard métallique régulièrement perforé et embouti, destiné à être de empâté de matière active, qui est caractérisé par le fait que ledit feuillard est embouti suivant un ensemble régulier de lignes formant des polygones et que la surface perforée est sensiblement égale à la surface emboutie.

La profondeur des emboutissages peut être de l'ordre de 0,6 mm pour un feuillard métallique dont l'épaisseur est de l'ordre de quelques centièmes de millimètre.

D'autres caractéristiques et avantages de l'invention apparaîtront au cours de la description suivante d'un mode de réalisation donné à titre illustratif mais nullement limitatif et dans lequel:

– la figure 1 montre en élévation un feuillard selon l'invention, gaufré mais non perforé,
– la figure 2 est une vue en coupe selon la ligne II–II de la figure 1,
– la figure 3 montre le feuillard de la figure 1 après perforation.

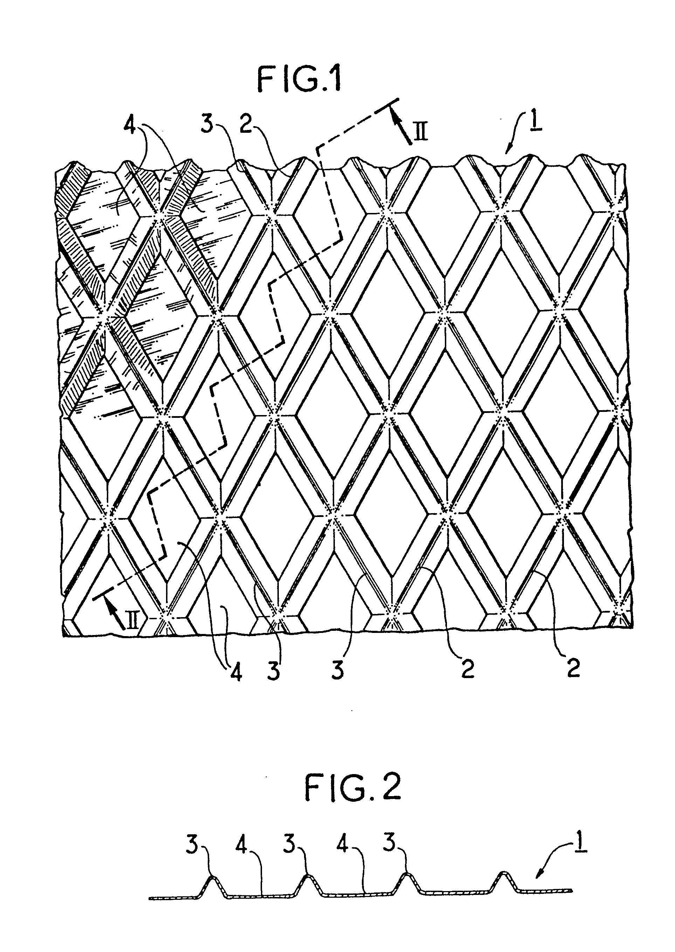

On voit sur les figures 1 et 2 un feuillard métallique 1 en acier nickelé d'épaisseur 0,1 mm qui a été embouti suivant deux séries 2 et 3 de lignes parallèles entre elles de manière à former des losanges 4 d'angle au sommet 60° environ. A titre d'exemple la dimension transversale des lignes embouties est de l'ordre de 0,75 mm, la profondeur est de préférence de l'ordre de 0,6 mm, et la distance entre deux lignes parallèles, de l'ordre de 2,4 mm.

Le feuillard ainsi gaufré est tel que sa surface emboutie représente environ 40% de sa surface totale.

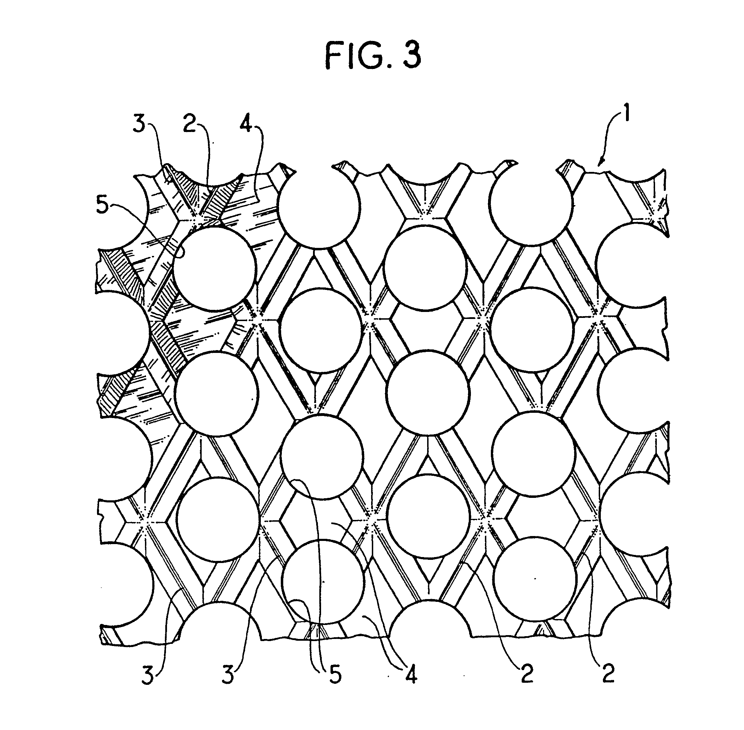

Après le gaufrage, le feuillard est perforé comme représenté sur la figure 3. Les perforations 5 sont circulaires, de diamètre 2 mm environ; leurs centres sont distants de 3 mm environ.

On obtient ainsi un taux de perforation de l'ordre de 40% de la surface du feuillard 1, c'est-à-dire sensiblement égal au taux de gaufrage précédemment défini.

On a constaté qu'un feuillard selon l'invention présentait une résistance mécanique à la traction supérieure à celle des feuillards antérieurement utilisés; l'avantage le plus important est que sa configuration permet un meilleur maintien de la matière active empâtée.

Bien entendu le diagramme en losanges n'a été donné qu'à titre d'exemple; il a l'avantage d'être facile à réaliser en fabrication mais il peut être remplacé par un diagramme polygonal quelconque, le rapport entre la surface des perforations et la surface des parties embouties étant maintenu.

Par ailleurs la profondeur des emboutissages sera choisie en fonction du matériau et de l'épaisseur du feuillard.

L'invention trouve son application notamment dans les accumulateurs alcalins.

## Revendications

1. Support d'électrode pour accumulateur électrique constitué par un feuillard métallique (1) régulièrement perforé et embouti, destiné à être empâte de matière active, caractérisé par le fait que ledit feuillard est embouti suivant un ensemble régulier de lignes (2,3) formant des polygones et que la surface perforée est sensiblement égale à la surface emboutie.

2. Support d'électrode selon la revendication 1, caractérisé par le fait que ladite surface perforée et ladite surface emboutie représentent chacune environ 40% de la surface du feuillard (1).

3. Support d'électrode selon la revendication 1 ou 2, caractérisé par le fait que la profondeur des emboutissages est 0,6 mm environ pour un feuillard (1) dont l'épaisseur est de l'ordre de quelques centièmes de millimètres.

4. Support d'électrode selon l'une des revendications 2 et 3, caractérisé par le fait que lesdits polygones sont des losanges (4).

5. Support d'électrode selon la revendication 4, caractérisé par le fait que lesdits losanges ont leur petit angle au sommet sensiblement égal à 60°.

6. Support d'électrode selon la revendication 5, caractérisé par le fait que, pour des perforations circulaires (5) de 2 mm de diamètre environ, distantes de 3 mm environ, la dimension transversale des lignes (2, 3) définissant lesdits losanges (4) est sensiblement de l'ordre de 0,75 mm, et la distance entre deux lignes de l'ordre de 2,4 mm.

## Patentansprüche

1. Elektrodenträger für einen elektrischen Akkumulator, bestehend aus einem gleichmässig durchlöcherten und geprägten Metallblech (1), das mit aktivem Material belegt werden soll, dadurch gekennzeichnet, dass das Blech gemäss einem gleichmässigen Linien-Raster (2, 3) geprägt ist, das Polygone ergibt und dass die durchlöcherte Oberfläche im wesentlichen gleich der geprägten Oberfläche ist.

2. Elektrodenträger nach Anspruch 1, dadurch gekennzeichnet, dass die durchlöcherte Oberfläche und die geprägte Oberfläche je etwa 40% der Oberfläche des Blechs (1) darstellen.

3. Elektrodenträger nach Anspruch 1 oder 2, dadurch gekennzeichnet, dass die Tiefe der Prägungen etwa 0,6 mm für ein Blech (1) beträgt, dessen Dicke einige Hundertstel Millimeter beträgt.

4. Elektrodenträger nach einem der Ansprüche 2 und 3, dadurch gekennzeichnet, dass die Vielecke Rauten (4) sind.

5. Elektrodenträger nach Anspruch 4, dadurch gekennzeichnet, dass der kleine Winkel an der Spitze der Rauten im wesentlichen 60° beträgt.

6. Elektrodenträger nach Anspruch 5, dadurch gekennzeichnet, dass für kreisförmige Löcher (5) von 2 mm Durchmesser, die etwa 3 mm voneinander entfernt sind, die Querabmessung der Linien (2, 3), die die Rauten (4) bilden, etwa 0,75 mm und der Abstand zwischen zwei Linien etwa 2,4 mm beträgt.

**Claims**

1. An electrode support for an electrical accumulator constituted by a sheet metal (1) which is regularly perforated and embossed and which is intended to be covered with active material, characterized in that said sheet metal is embossed according to a regular assembly of lines (2, 3) forming polygones and in that the perforated surface is essentially equal to the embossed surface.

2. An electrode support according to claim 1, characterized in that said perforated surface and said embossed surface each represent approximately 40% of the surface of the sheet metal (1).

3. An electrode support according to claim 1 or 2, characterized in that the depth of the bosses is approximately 0,6 mm for a sheet (1) the thickness of which is of some hundredth millimeters.

4. An electrode support according to one of claims 2 and 3, characterized in that said polygones are lozenges (4).

5. An electrode support according to claim 4, characterized in that the small angle at the top of said lozenges is essentially equal to 60°.

6. An electrode support according to claim 5, characterized in that for circular perforations (5) of 2 mm diameter, with a distance from each other of about 3 mm, the transversal dimension of the lines (2, 3) defining said lozenges (4) is essentially of the order of 0,75 mm, and the distance between two lines is about 2,4 mm.

# FIG.1

# FIG.2

# FIG. 3